# FASCICULE DE BREVET EUROPEEN

(11) **EP 3 152 942 B1**
(45) Date de publication et mention de la délivrance du brevet: **27.11.2019**
(21) Numéro de dépôt: 15733802.1
(22) Date de dépôt: 04.06.2015
(51) Int. Cl.: G06Q 20/20, G06Q 40/02, H04W 12/08, G06Q 20/32, G06Q 20/42, H04W 8/12, H04L 29/06, H04W 12/12, H04W 4/12

(54) **SÉCURISATION D'UNE ENTRÉE DANS UNE BASE DE DONNÉES D'UTILISATEURS**
SICHERUNG EINER EINGABE IN EINER BENUTZERDATENBANK
SECURING AN ENTRY IN A USER DATABASE

(30) Priorité: 05.06.2014 FR 1455138
(43) Date de publication de la demande: 12.04.2017
(73) Titulaire: Orange, 75015 Paris (FR)
(72) Inventeur: COTTET, Jean-Paul, 75015 Paris (FR); MASSIERE, Olivier, 75002 Paris (FR); DUBOIS, Pierre-François, 92330 Sceaux (FR)
(86) Numéro de dépôt international: PCT/FR2015/051487
(87) Numéro de publication internationale: WO 2015/185869

(56) Documents cités:
- WO-A1-2005/086504
- WO-A2-2008/008735
- WO-A2-2008/036475
- US-A1- 2004 025 057
- US-A1- 2006 265 243
- US-A1- 2012 282 954

## Description

La présente invention concerne la création d'entrées dans des bases de données, et en particulier la création d'un compte client chez une enseigne marchande par exemple.

La création d'un compte client nécessite généralement le remplissage manuel d'un formulaire par l'utilisateur, durant lequel il doit renseigner des champs correspondant à des informations personnelles (nom, prénom, adresse, numéro de téléphone, adresse mail, par exemple).

Un tel renseignement manuel est fastidieux pour l'utilisateur. En outre, la confidentialité des données personnelles n'est pas assurée, le formulaire physique pouvant être égaré. La transposition des données manuscrites dans une base de données virtuelles peut en outre engendrer des erreurs de saisie.

Le document WO 2008/008735 décrit un procédé permettant à des consommateurs d'effectuer des paiements au moyen d'un dispositif électronique portable.

Le document US 2004/025057 décrit un procédé d'établissement d'un canal de communication sécurité entre un transmetteur et au moins un récepteur.

Le document WO 2008/036475 décrit un procédé pour obtenir une autorisation d'un payeur pour effectuer une transaction.

Le document WO 2005/086504 décrit un procédé pour sélectionner un mode de téléchargement pour télécharger des informations depuis un appareil distant.

La présente invention vient améliorer cette situation. Elle est définie dans les revendications indépendantes. Les modes de réalisation préférés sont définis dans les revendications dépendantes.

Elle propose à cet effet un procédé de sécurisation d'une entrée dans une base de données d'utilisateurs, le procédé étant mis en œuvre dans un serveur de gestion en charge de la base de données et comprenant les étapes suivantes :
- réception d'un identifiant réseau d'un terminal d'utilisateur, identifiant le terminal utilisateur dans un réseau de télécommunications ;
- transmission à une plateforme réseau d'un opérateur du réseau de télécommunications d'une requête d'une confirmation de l'utilisateur, la requête comprenant l'identifiant réseau du terminal utilisateur ;
- sur réception d'une confirmation de l'utilisateur depuis la plateforme réseau, création d'une entrée de l'utilisateur du terminal dans la base de données d'utilisateurs, l'entrée comprenant l'identifiant réseau du terminal utilisateur.

Ainsi, la création d'une entrée dans une base de données d'utilisateurs est simplifiée comparativement à la solution de l'état de la technique. En effet, seul un identifiant réseau, tel qu'un numéro de téléphone, est nécessaire à la création de l'entrée (d'un compte client par exemple), et des informations supplémentaires peuvent ainsi être apportées par l'utilisateur ultérieurement. En outre, en confirmant la création par l'utilisateur au moyen de l'identifiant réseau du terminal utilisateur, un marchand associé au serveur de gestion peut vérifier que l'identifiant qui lui est communiqué correspond à la bonne personne. La confirmation peut en effet être effectuée par l'utilisateur devant le marchand, au moyen du terminal utilisateur.

La confidentialité des informations liées à l'utilisateur est par ailleurs améliorée en évitant le remplissage d'un formulaire papier pouvant être égaré.

Selon un mode de réalisation, le procédé peut comprendre en outre les étapes suivantes, mises en œuvre dans la plateforme réseau :
- sur réception de la requête d'une confirmation de l'utilisateur, vérification qu'une application de sécurité est installée sur le terminal utilisateur identifié par l'identifiant réseau compris dans la requête ;
- en cas de vérification positive, transmission d'un message pour afficher une fenêtre pop up via l'application de sécurité installée sur le terminal utilisateur, la fenêtre pop up proposant de valider ou d'annuler la confirmation ; et
- en cas de validation de la fenêtre pop up par l'utilisateur, transmission d'une confirmation de l'utilisateur au serveur de gestion.

Ce mode de réalisation permet avantageusement de tirer partie d'une application de sécurité pouvant être, par exemple, installée sur le module de sécurité (carte SIM) du terminal mobile. En outre, l'opérateur réseau en charge de la plateforme réseau a aisément accès aux terminaux utilisateur sur lesquels l'application de sécurité est installée. La confirmation par l'utilisateur est par ailleurs facilitée par l'utilisation d'une fenêtre pop-up (ou fenêtre « intruse » ou « surgissante »). La fenêtre pop-up peut en outre rappeler à l'utilisateur le contexte de la confirmation (contexte de la création d'un compte utilisateur et identification du marchand par exemple).

En complément, le procédé peut comprendre en outre l'étape suivante, mise en œuvre dans la plateforme réseau :
- en cas de vérification négative qu'une application de sécurité est installée sur le terminal utilisateur, transmission d'un message au serveur de gestion indiquant que l'application de sécurité n'est pas installée sur le terminal utilisateur.

Ainsi, un marchand en charge du serveur de gestion peut mettre en œuvre une solution alternative pour la création de l'entrée dans la base de données d'utilisateurs (remplissage d'un formulaire à la main par exemple). En outre, le serveur de gestion peut ainsi répertorier les terminaux utilisateurs qui disposent ou non de l'application de sécurité.

En variante, le procédé peut comprendre en outre l'étape suivante, mises en œuvre dans la plateforme réseau :
- en cas de vérification négative qu'une application de sécurité est installée sur le terminal utilisateur, transmission d'un message court au terminal utilisateur, le message court requérant une confirmation de l'utilisateur ;
- en cas de réception d'un message court de réponse comprenant une confirmation de l'utilisateur, transmission de la confirmation de l'utilisateur au serveur de gestion.

Selon cette variante, une solution de remplacement est avantageusement prévue dans le cas où l'application de sécurité n'est pas disponible. On entend par message court tout message de type SMS, ou encore MMS. Le message court peut proposer à l'utilisateur le renvoi d'un message du même type à la plateforme réseau, le corps du message comprenant par exemple « OK » pour confirmer la création de l'entrée.

Selon un mode de réalisation, le procédé peut comprendre en outre les étapes suivantes mises en œuvre dans le serveur de gestion :
- sur réception d'une confirmation de l'utilisateur, transmission au terminal utilisateur d'un message comprenant un lien vers une page pour renseigner des données supplémentaires associées à l'utilisateur ;
- association des données supplémentaires avec l'entrée créée dans la base de données d'utilisateurs.

Ainsi, l'utilisateur a la possibilité de décider du moment auquel il souhaite remplir des champs correspondant à des informations supplémentaires permettant de compléter l'entrée précédemment créée.

Dans un mode de réalisation de l'invention, le procédé peut comprendre en outre les étapes suivantes, mises en œuvre dans le serveur de gestion :
- réception d'informations de crédit associées à l'identifiant réseau du terminal utilisateur ;
- transmission au terminal utilisateur d'une requête d'acceptation du crédit par l'utilisateur comprenant l'identifiant réseau du terminal utilisateur ;
- sur réception d'une acceptation du crédit par l'utilisateur, mise à jour, dans la base de données d'utilisateurs, d'un crédit de l'utilisateur en fonction des informations de crédit reçues.

Ce mode de réalisation permet de tirer profit de l'entrée précédemment créée et permet la sécurisation de l'attribution de crédit par un marchand à un client possédant le terminal utilisateur.

Selon un mode de réalisation, le procédé peut comprendre en outre les étapes suivantes, mises en œuvre dans le serveur de gestion :
- réception d'informations de consommation d'un crédit associées à l'identifiant réseau du terminal utilisateur ;
- transmission au terminal utilisateur d'une requête d'acceptation de la consommation du crédit par l'utilisateur comprenant l'identifiant réseau du terminal utilisateur ;
- sur réception d'une acceptation de la consommation de crédit par l'utilisateur, mise à jour, dans la base de données d'utilisateurs, d'un crédit de l'utilisateur en fonction des informations de consommation de crédit reçues.

Ce mode de réalisation permet de tirer profit de l'entrée précédemment créée et permet la sécurisation de la consommation de crédit par un client possédant un compte client chez un marchand en charge du serveur de gestion.

En complément, la transmission au terminal utilisateur d'une requête d'acceptation peut comprendre la transmission d'un message pour afficher une fenêtre pop-up via une application de sécurité installée sur le terminal utilisateur.

Les échanges sont ainsi sécurisés et la confirmation par le client est facilitée par l'utilisation d'une fenêtre pop-up.

En complément, la base de données d'utilisateurs peut stocker en outre les identifiants réseau des terminaux utilisateurs sur lesquels l'application de sécurité est installée, et le message pour afficher la fenêtre pop-up peut être transmis au terminal utilisateur sur vérification positive dans la base de données d'utilisateurs que l'application de sécurité est installée sur le terminal utilisateur.

Selon un mode de réalisation, la requête de réception d'une confirmation de l'utilisateur peut être transmise à la plateforme réseau, sur vérification qu'aucune entrée ne correspond à l'identifiant réseau du terminal utilisateur dans la base de données d'utilisateurs.

Ce mode de réalisation permet d'éviter la création d'entrées redondantes dans la base de données d'utilisateurs.

Un deuxième aspect de l'invention concerne un programme d'ordinateur comportant des instructions pour la mise en œuvre du procédé selon le premier aspect de l'invention, lorsque ce programme est exécuté par un processeur.

Un troisième aspect de l'invention concerne un serveur de gestion en charge d'une base de données d'utilisateurs, le serveur de gestion comprenant :
- une unité de réception d'un identifiant réseau d'un terminal d'utilisateur, identifiant le terminal utilisateur dans un réseau de télécommunications ;
- une interface réseau pour la transmission à une plateforme réseau d'un opérateur du réseau de télécommunications d'une requête d'une confirmation de l'utilisateur, la requête comprenant l'identifiant réseau du terminal utilisateur, et pour la réception d'une confirmation de l'utilisateur depuis la plateforme réseau ;
- une unité de création pour créer, sur réception d'une confirmation de l'utilisateur depuis la plateforme réseau, une entrée de l'utilisateur du terminal dans la base de données d'utilisateurs, l'entrée comprenant l'identifiant réseau du terminal utilisateur.

Un quatrième aspect de l'invention concerne une plateforme d'un réseau de télécommunications comprenant :
- une première interface réseau pour recevoir une requête d'une confirmation d'un utilisateur depuis un serveur de gestion d'une base de données, la requête comprenant un identifiant réseau d'un terminal utilisateur identifiant le terminal utilisateur dans le réseau de télécommunications ;
- une unité de vérification qu'une application de sécurité est installée sur le terminal utilisateur identifié par l'identifiant réseau compris dans la requête ;
- une seconde interface réseau pour transmettre, en cas de vérification positive par l'unité de vérification, un message pour afficher une fenêtre pop-up via l'application de sécurité installée sur le terminal utilisateur, la fenêtre pop-up proposant de valider ou d'annuler la confirmation

La première interface réseau peut en outre être adaptée pour transmettre une confirmation de l'utilisateur au serveur de gestion, en cas de validation de la fenêtre pop-up par l'utilisateur.

D'autres caractéristiques et avantages de l'invention apparaîtront à l'examen de la description détaillée ci-après, et des dessins annexés sur lesquels:
- la figure 1 illustre un système de sécurisation d'une entrée dans une base de données d'utilisateurs selon un mode de réalisation de l'invention ;
- la figure 2 présente un diagramme d'échanges entre les entités du système de la figure 1, selon un mode de réalisation de l'invention ;
- la figure 3 présente la structure d'un serveur de gestion selon un mode de réalisation de l'invention ;
- la figure 4 présente la structure d'une plateforme de réseau selon un mode de réalisation de l'invention.

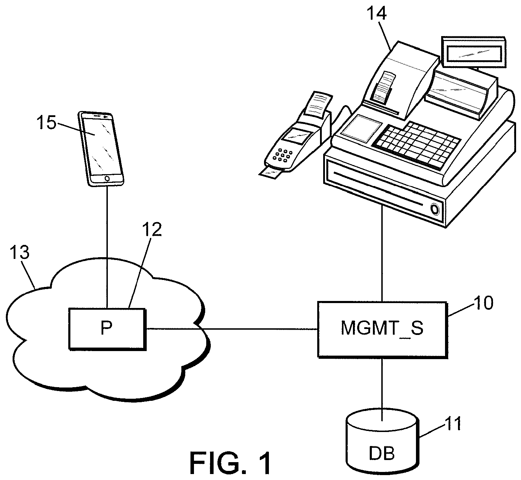

La figure 1 illustre un système de sécurisation d'une entrée dans une base de données d'utilisateurs selon un mode de réalisation de l'invention.

Le système comprend un serveur de gestion 10 en charge d'une base de données d'utilisateurs 11. Le serveur de gestion 10 et la base de données d'utilisateurs 11 peuvent par exemple appartenir à un marchand souhaitant mettre en place un système de fidélisation de ses clients en proposant la création de comptes client.

Le serveur de gestion 10 est en communication avec un terminal 14 localisé par exemple chez le marchand, et peut par exemple être un terminal de paiement par carte bancaire, ou un ordinateur fixe ou portable, ou encore un lecteur NFC (pour « *Near Field Communication* » en anglais) apte à communiquer avec un terminal utilisateur en champ proche afin d'acquérir son identifiant réseau. Plus généralement le terminal 14 représente tout moyen de saisie de données numériques ou alphanumériques.

Le serveur de gestion 10 est en outre apte à accéder à un réseau de télécommunications 13 et notamment à une plateforme réseau 12 de l'opérateur réseau. La plateforme réseau 12 peut en outre communiquer avec des terminaux mobiles d'utilisateurs 15, tels que des téléphones portables, de type Smartphone ou « feature phone » par exemple, ou tablette tactile, et plus généralement avec tout terminal pouvant être équipé d'un module de sécurité tels qu'une carte SIM et d'une interface utilisateur (écran et clavier par exemple, ou encore interface de saisie vocale). Un unique terminal utilisateur 15 a été représenté en figure 1, à titre purement illustratif. Le terminal utilisateur 15 peut ainsi être identifié par un identifiant réseau (par exemple un numéro de téléphone associé au module de sécurité du terminal utilisateur 15).

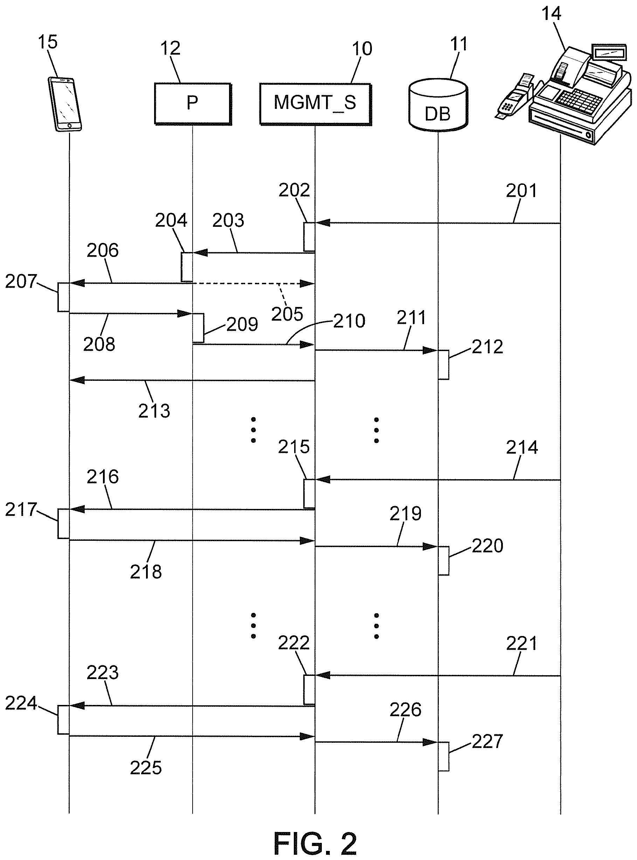

La Figure 2 présente un diagramme d'échanges entre les entités du système de la figure 1, et présente ainsi les étapes d'un procédé de sécurisation d'une entrée dans la base de données d'utilisateurs 11 selon un mode de réalisation de l'invention.

A titre d'exemple, on considère dans ce qui suit qu'un utilisateur a accès au terminal de paiement 14 chez un marchand, et qu'il se voit proposer la création d'un compte client auprès du marchand. A cet effet, en lieu et place de la fourniture d'un formulaire papier à remplir, le marchand peut proposer à l'utilisateur la saisie de l'identifiant réseau du terminal utilisateur 15 appartenant à l'utilisateur. Comme détaillé précédemment, l'identifiant réseau peut être le numéro de téléphone mobile de l'utilisateur. Dans ce qui suit, l'exemple d'un numéro de téléphone est considéré, à titre purement illustratif.

Sur saisie du numéro de téléphone, ce dernier est transmis au serveur de gestion 10 à une étape 201.

A une étape optionnelle 202, le serveur de gestion 10 peut vérifier qu'aucune entrée dans la base de données 11 ne correspond au numéro de téléphone reçu. Si une entrée existe déjà, le serveur de gestion 10 peut en informer le terminal 14 et le procédé est interrompu.

Dans le cas contraire, le serveur de gestion 10 transmet, à une étape 203, une requête d'une confirmation de l'utilisateur, la requête comprenant le numéro de téléphone reçu.

A une étape 204, sur réception de la requête d'une confirmation de l'utilisateur, la plateforme réseau 12 peut vérifier qu'une application de sécurité est installée sur le terminal utilisateur 15 identifié par le numéro de téléphone compris dans la requête. On entend par application de sécurité, toute application téléchargeable (ou embarquée) et pouvant être installée sur le module de sécurité du terminal utilisateur, et permettant de piloter une fenêtre pop-up afin de requérir par l'utilisateur l'acceptation ou le refus de la confirmation pour créer un compte client.

Afin de réaliser l'étape de vérification, l'opérateur réseau peut disposer d'une base de données stockant les identifiants réseau (ou numéros de téléphone) des terminaux utilisateurs disposant d'une telle application de sécurité.

En cas de vérification positive que l'application de sécurité est installée sur le module de sécurité du terminal utilisateur 15, la plateforme réseau 12 peut envoyer à une étape 206 un message pour afficher une fenêtre pop up via l'application de sécurité installée sur le terminal utilisateur, la fenêtre pop up proposant de valider ou d'annuler la confirmation. En cas de vérification négative, un message court de type SMS (pour « *Short Message Service* ») peut être envoyé au terminal utilisateur 15, le message court comprenant un texte demandant de renvoyer un message court de confirmation (par exemple un message court de réponse comprenant le corps de texte « OK ») si l'utilisateur souhaite créer un compte client. En variante, en cas de vérification négative, la plateforme réseau 12 peut transmettre à une étape 205 un message au serveur de gestion 10 indiquant que l'application de sécurité n'est pas installée sur le terminal utilisateur 15.

A une étape 207, l'utilisateur peut, via le terminal utilisateur 15, accepter ou refuser la confirmation, soit par sélection d'un champ correspondant de la fenêtre pop-up (si l'application de sécurité est installée sur le terminal utilisateur 15) soit par l'envoi d'un message court de réponse (si l'application de sécurité n'est pas installée sur le terminal utilisateur 15).

Ainsi, une confirmation ou un refus de l'utilisateur peut être transmis à la plateforme réseau 12 à une étape 208.

La plateforme réseau 12 détermine à une étape 209 si l'utilisateur a confirmé la création d'un compte client, sur la base de la réponse reçu à la fenêtre pop-up ou au message court.

La confirmation éventuelle est transmise ensuite au serveur de gestion à une étape 210.

Sur réception d'une confirmation de l'utilisateur depuis la plateforme réseau 12, le serveur de gestion 10 crée, à une étape 211, une entrée de l'utilisateur du terminal 15 dans la base de données d'utilisateurs 11, l'entrée comprenant l'identifiant réseau (le numéro de téléphone dans cet exemple) du terminal utilisateur 15.

La base de données d'utilisateurs 11 stocke l'entrée créée à une étape 212.

Ainsi, le procédé selon l'invention permet de sécuriser la création d'une entrée d'un utilisateur dans une base de données utilisateur. En effet, la confirmation peut être avantageusement effectuée par l'utilisateur en face du marchand, ce qui assure que l'identifiant réseau communiqué au terminal 14 du marchand correspond bien à l'utilisateur. En variante, la confirmation peut être effectuée à distance, par exemple lorsqu'une première personne souhaite créer un compte client au nom d'une seconde personne.

En outre, dans le cas où l'application de sécurité est installée sur le terminal, les échanges entre le terminal utilisateur 15 et la plateforme réseau 12 sont sécurisés. L'utilisation d'une fenêtre pop-up facilite par ailleurs la confirmation par l'utilisateur, comparativement à l'utilisation de messages courts. En outre, l'opérateur de réseau en charge de la plateforme réseau a connaissance des terminaux utilisateur sur lesquels l'application de sécurité est installée, ce qui permet de mettre en œuvre aisément l'étape 204 de vérification. La création du compte client est en outre facilitée puisqu'il est uniquement requis de l'utilisateur la transmission du numéro de téléphone de son terminal utilisateur.

De manière complémentaire, le procédé peut comprendre en outre une étape 213, de transmission par le serveur de gestion 10, au terminal utilisateur 15, d'un message comprenant un lien vers une page pour renseigner des données supplémentaires liées à l'utilisateur.

On entend par « page » une page de type Internet, pouvant présenter des champs respectivement associés à chacune des données supplémentaires liées à l'utilisateur. Ainsi, le renseignement de ces informations peut être reporté comparativement à la solution de l'art antérieur. En outre, la confidentialité des données est améliorée par rapport à un remplissage de données sur un formulaire papier. Une page internet de type sécurisée « https » par exemple peut être prévue pour renseigner les données supplémentaires.

Les données supplémentaires renseignées peuvent ensuite être associées à l'entrée créée à l'étape 211.

L'invention prévoit également des étapes complémentaires liées à l'utilisation du compte client par l'utilisateur.

Par exemple, une offre promotionnelle peut être proposée à l'utilisateur par le marchand, auquel cas un crédit associé à son compte client peut lui être attribué. Afin d'assurer que l'utilisateur corresponde bien au numéro de téléphone qui est communiqué au marchand, les étapes 214 à 220 peuvent être mises en œuvre.

A une étape 214, le serveur de gestion 10 peut recevoir du terminal 14 du marchand (ou par tout autre moyen de communication) des informations de crédit associées à l'identifiant réseau (le numéro de téléphone dans cet exemple) du terminal utilisateur 15.

A une étape 215, le serveur de gestion 10 extrait l'identifiant réseau du terminal utilisateur 15 et génère une requête d'acceptation du crédit par l'utilisateur, en vue de sa transmission à une étape 216 au terminal utilisateur 15 identifié par l'identifiant réseau. Aucune restriction n'est attachée à la requête d'acceptation du crédit. Il peut par exemple s'agir d'un message court requérant un message court de réponse de l'utilisateur, ou il peut s'agir d'un message pour afficher une fenêtre pop-up sur le terminal utilisateur. De tels messages peuvent être envoyés directement par le serveur de gestion 10 au terminal utilisateur 15, ou peuvent transiter par la plateforme réseau 12.

Lorsqu'un message pour afficher une fenêtre pop-up est envoyé directement du serveur de gestion 10 au terminal utilisateur, le serveur de gestion 10 peut stocker les identifiants réseau des utilisateurs disposant de l'application de sécurité. De telles informations peuvent être déduites de l'absence de réception du message décrit à l'étape 205, informant que l'application de sécurité n'est pas installée sur le terminal utilisateur 15.

A une étape 217, l'utilisateur peut confirmer ou non qu'il accepte le crédit attribué par le marchand. L'étape de confirmation peut être effectuée par l'utilisateur devant le marchand qui est ainsi assuré que l'identifiant réseau communiqué correspond bien à la bonne personne.

A une étape 218, une acceptation du crédit par l'utilisateur peut être reçue par le serveur de gestion 10, qui met ainsi à jour, dans la base de données d'utilisateurs 11, à une étape 219, un crédit de l'utilisateur en fonction des informations de crédit reçues à l'étape 214. Un tel crédit est associé à l'entrée créée à l'étape 211. Aucune restriction n'est attachée à la forme que prend le crédit (avoir pour l'achat de produits, pourcentage de réduction pour un prochain achat, etc). Le crédit mis à jour est stocké dans la base de données d'utilisateurs à une étape 220.

En outre, l'utilisateur peut utiliser le crédit qui lui a été précédemment attribué, par exemple lors d'un paiement auprès du marchand.

Ainsi, à une étape 221, le serveur de gestion 10 peut recevoir du terminal 14 du marchand (ou de tout autre moyen de communication du marchand) des informations de consommation de crédit associées à l'identifiant réseau (le numéro de téléphone dans cet exemple) du terminal utilisateur 15.

A une étape 222, le serveur de gestion 10 extrait l'identifiant réseau du terminal utilisateur 15 et génère une requête d'acceptation de consommation de crédit par l'utilisateur, en vue de sa transmission à une étape 223 au terminal utilisateur 15 identifié par l'identifiant réseau. Aucune restriction n'est attachée à la requête d'acceptation de consommation de crédit. Il peut par exemple s'agir d'un message court requérant un message court de réponse de l'utilisateur. En variante, il peut s'agir d'un message pour afficher une fenêtre pop-up sur le terminal utilisateur. De tels messages peuvent être envoyés directement par le serveur de gestion 10 au terminal utilisateur 15, ou peuvent transiter par la plateforme réseau 12.

Comme précédemment expliqué, lorsqu'un message pour afficher une fenêtre pop-up est envoyé directement du serveur de gestion 10 au terminal utilisateur 15, le serveur de gestion 10 peut stocker les identifiants réseau des utilisateurs disposant de l'application de sécurité. De telles informations peuvent être déduites de l'absence de réception du message décrit à l'étape 205, informant que l'application de sécurité n'est pas installée sur le terminal utilisateur 15.

A une étape 224, l'utilisateur peut confirmer ou non qu'il accepte la consommation de crédit. L'étape de confirmation peut être effectuée par l'utilisateur en face du marchand, qui est ainsi assuré que l'identifiant réseau communiqué correspond bien au client en face de lui.

A une étape 225, une acceptation de la consommation de crédit par l'utilisateur peut être reçue par le serveur de gestion 10, qui met ainsi à jour, dans la base de données d'utilisateurs 11, à une étape 226, un crédit de l'utilisateur en fonction des informations de consommation de crédit reçues à l'étape 221. Le crédit mis à jour est stocké dans la base de données d'utilisateurs à une étape 227.

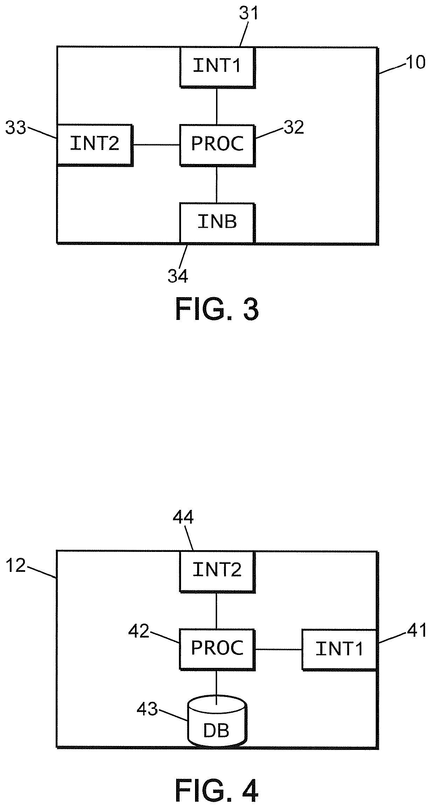

La figure 3 présente une structure du serveur de gestion 10 selon un mode de réalisation de l'invention.

Le serveur de gestion 10 comprend une première interface 31 pour communiquer avec le terminal 14 du marchand, et notamment pour recevoir l'identifiant réseau du terminal utilisateur 15. Le serveur de gestion 10 comprend en outre une unité de traitement 32 (un processeur par exemple), apte à :
- vérifier qu'aucune entrée dans la base de données 11 ne correspond au numéro de téléphone reçu (étape 202) ;
- créer une entrée de l'utilisateur du terminal 15 dans la base de données d'utilisateurs 11 (étape 211) ;
- extraire l'identifiant réseau du terminal utilisateur 15 et générer une requête d'acceptation du crédit par l'utilisateur (étape 215) ;
- mettre à jour, dans la base de données d'utilisateurs 11, un crédit de l'utilisateur en fonction des informations de crédit reçues (étape 219) ;
- extraire l'identifiant réseau du terminal utilisateur 15 et générer une requête d'acceptation de consommation de crédit par l'utilisateur (étape 222) ;
- mettre à jour, dans la base de données d'utilisateurs 11, un crédit de l'utilisateur en fonction des informations de consommation de crédit reçues (étape 226).

L'unité de traitement 32 est en outre apte à associer des données supplémentaires reçues par le serveur de gestion 10, avec l'entrée créée à l'étape 211. L'unité de traitement 32 peut également stocker un programme informatique pour la mise en œuvre des étapes mentionnées ci-dessus.

Une seconde interface 33 est reliée au réseau de télécommunications 13, et est apte à communiquer avec la plateforme réseau 12.

Une troisième interface 34 est apte à communiquer avec la base de données d'utilisateurs 11.

La figure 4 présente une structure de la plateforme réseau 12 selon un mode de réalisation de l'invention.

La plateforme réseau 12 comprend une première interface réseau 41 apte à communiquer notamment avec le serveur de gestion 10, pour recevoir la requête d'une confirmation d'un utilisateur à l'étape 203, pour transmettre le message indiquant qu'aucune application de sécurité n'est installée sur le terminal utilisateur identifié (étape 205) et pour transmettre l'éventuelle confirmation de l'utilisateur (l'étape 210).

En outre, la plateforme réseau 12 comprend une unité de traitement 42 et une base de données interne 43. La base de données interne 43 peut stocker les identifiants réseau des terminaux utilisateur sur lesquels l'application de sécurité est installée. L'unité de traitement 42 est apte à :
- vérifier qu'une application de sécurité est installée sur le terminal utilisateur 15 identifié par le numéro de téléphone compris dans la requête reçue à l'étape 203 (étape 204). L'unité de traitement 42 remplit ainsi le rôle d'une unité de vérification ;
- informer le serveur de gestion 10 que l'application de sécurité n'est pas installée sur le terminal utilisateur identifié (étape 205) ;
- générer un message pour afficher une fenêtre pop-up ou un message court destiné au terminal utilisateur 15 (étape 206) ;
- déterminer à une étape 209 si l'utilisateur a confirmé la création d'un compte client, sur la base de la réponse reçu à la fenêtre pop-up ou au message court (étape 209).

L'unité de traitement 42 peut également stocker un programme informatique pour la mise en œuvre des étapes mentionnées ci-dessus.

La plateforme réseau 12 comprend une seconde interface réseau 44 apte à communiquer avec le terminal utilisateur 15 (par exemple par l'intermédiaire d'un réseau mobile), et notamment pour transmettre, en cas de vérification positive par l'unité de traitement 42, le message pour afficher un pop-up sur le terminal utilisateur 15, ou un message court (étape 206), et pour recevoir la réponse du terminal utilisateur (étape 208).

## Revendications

1. Procédé de sécurisation d'une entrée dans une base de données d'utilisateurs (11), ledit procédé comprenant les étapes suivantes mises en œuvre dans un serveur de gestion (10) en charge de ladite base de données :
- réception d'un identifiant réseau d'un terminal d'utilisateur (15), identifiant ledit terminal utilisateur (15) dans un réseau de télécommunications (13) ;
- transmission à une plateforme réseau (12) du réseau de télécommunications (13) d'une requête d'une confirmation de l'utilisateur, la requête comprenant l'identifiant réseau du terminal utilisateur (15) ;
- sur réception d'une confirmation de l'utilisateur depuis la plateforme réseau, création d'une entrée dans la base de données d'utilisateurs (11), ladite entrée comprenant l'identifiant réseau du terminal utilisateur (15) et transmission au terminal utilisateur d'un message comprenant un lien vers une page pour renseigner des données supplémentaires associées à l'utilisateur ;
- association des données supplémentaires avec l'entrée créée dans la base de données d'utilisateurs (11),
le procédé comprenant en outre les étapes suivantes mises en oeuvre dans la plateforme réseau (12):
- sur réception de la requête d'une confirmation de l'utilisateur, vérification qu'une application de sécurité est installée sur le terminal utilisateur (15) identifié par l'identifiant réseau compris dans la requête ;
- en cas de vérification positive, transmission d'un message pour afficher une fenêtre pop up via l'application de sécurité installée sur le terminal utilisateur (15), la fenêtre pop up proposant de valider ou d'annuler la confirmation ; et
- en cas de validation de la fenêtre pop up par l'utilisateur, transmission d'une confirmation de l'utilisateur au serveur de gestion (10).

2. Procédé selon la revendication 1, comprenant en outre l'étape suivante mise en oeuvre dans la plateforme réseau (12):
- en cas de vérification négative qu'une application de sécurité est installée sur le terminal utilisateur (15), transmission d'un message au serveur de gestion indiquant que l'application de sécurité n'est pas installée sur le terminal utilisateur.

3. Procédé selon la revendication 1, comprenant en outre les étapes suivantes mises en oeuvre dans la plateforme réseau (12):
- en cas de vérification négative qu'une application de sécurité est installée sur le terminal utilisateur (15), transmission d'un message court au terminal utilisateur, le message court requérant une confirmation de l'utilisateur ;
- en cas de réception d'un message court de réponse comprenant une confirmation de l'utilisateur, transmission de la confirmation de l'utilisateur au serveur de gestion (10).

4. Procédé selon l'une des revendications précédentes, comprenant en outre les étapes suivantes mises en oeuvre dans la le serveur de gestion (10):
- réception d'informations de crédit associées à l'identifiant réseau du terminal utilisateur (15) ;
- transmission au terminal utilisateur d'une requête d'acceptation du crédit par l'utilisateur comprenant l'identifiant réseau du terminal utilisateur ;
- sur réception d'une acceptation du crédit par l'utilisateur, mise à jour, dans la base de données d'utilisateurs, d'un crédit de l'utilisateur en fonction des informations de crédit reçues.

5. Procédé selon l'une des revendications précédentes, comprenant en outre les étapes suivantes mises en oeuvre dans la le serveur de gestion (10):
- réception d'informations de consommation d'un crédit associées à l'identifiant réseau du terminal utilisateur (15);
- transmission au terminal utilisateur d'une requête d'acceptation de la consommation du crédit par l'utilisateur comprenant l'identifiant réseau du terminal utilisateur ;
- sur réception d'une acceptation de la consommation de crédit par l'utilisateur, mise à jour, dans la base de données d'utilisateurs (11), d'un crédit de l'utilisateur en fonction des informations de consommation de crédit reçues.

6. Procédé selon la revendication 4 ou 5, dans lequel la transmission au terminal utilisateur (15) d'une requête d'acceptation comprend la transmission d'un message pour afficher une fenêtre pop-up via une application de sécurité installée sur le terminal utilisateur.

7. Procédé selon la revendication 6, dans lequel la base de données d'utilisateurs (11) stocke en outre les identifiants réseau des terminaux utilisateurs (15) sur lesquels l'application de sécurité est installée, et dans lequel le message pour afficher la fenêtre pop-up est transmise au terminal utilisateur sur vérification positive dans la base de données d'utilisateurs que l'application de sécurité est installée sur ledit terminal utilisateur.

8. Procédé selon l'une des revendications précédentes, dans lequel la requête de réception d'une confirmation de l'utilisateur est transmise à la plateforme réseau (12), sur vérification qu'aucune entrée ne correspond à l'identifiant réseau du terminal utilisateur dans la base de données d'utilisateurs.

9. Programme d'ordinateur comportant des instructions pour la mise en œuvre du procédé selon l'une quelconque des revendications précédentes, lorsque ce programme est exécuté par deux processeurs.

10. Système comprenant une plateforme d'un réseau de télécommunications (13) et un serveur de gestion (10) en charge d'une base de données d'utilisateurs, ledit serveur de gestion comprenant :
- une unité de réception (31) configurée pour recevoir un identifiant réseau d'un terminal utilisateur (15), identifiant le terminal utilisateur (15) dans le réseau de télécommunications;
- une interface réseau (33) de serveur configurée pour la transmission à la plateforme réseau d'un opérateur du réseau de télécommunications d'une requête d'une confirmation de l'utilisateur, la requête comprenant l'identifiant réseau du terminal utilisateur, et configurée pour la réception d'une confirmation de l'utilisateur depuis la plateforme réseau ;
- une unité de création (32) configurée pour créer, sur réception d'une confirmation de l'utilisateur depuis la plateforme réseau, une entrée dans la base de données d'utilisateurs (11), ladite entrée comprenant l'identifiant réseau du terminal utilisateur,
dans lequel l'interface réseau est en outre configurée pour, sur réception de la confirmation de l'utilisateur depuis la plateforme réseau, transmettre au terminal utilisateur d'un message comprenant un lien vers une page pour renseigner des données supplémentaires associées à l'utilisateur ;
et dans lequel l'unité de création (32) est en outre configurée pour associer des données supplémentaires avec l'entrée créée dans la base de données d'utilisateurs (11),
la plateforme réseau comprenant :
- une première interface réseau (41) de plateforme configurée pour recevoir la requête d'une confirmation d'un utilisateur depuis le serveur de gestion d'une base de données ;
- une unité de vérification (42) configurée pour vérifier qu'une application de sécurité est installée sur le terminal utilisateur (15) identifié par l'identifiant réseau compris dans la requête ;
- une seconde interface réseau (43) de plateforme configurée pour transmettre, en cas de vérification positive par l'unité de vérification (42), un message pour afficher une fenêtre pop-up via l'application de sécurité installée sur le terminal utilisateur, ladite fenêtre pop-up proposant de valider ou d'annuler la confirmation dans lequel la première interface réseau (41) est en outre adaptée pour transmettre une confirmation de l'utilisateur au serveur de gestion, en cas de validation de la fenêtre pop-up par l'utilisateur.

## Patentansprüche

1. Verfahren zur Sicherung einer Eingabe in einer Benutzerdatenbank (11), wobei das Verfahren die folgenden Schritte beinhaltet, die in einem für die Datenbank zuständigen Verwaltungsserver (10) durchgeführt werden:
- Empfangen einer Netzwerkkennung eines Benutzerendgeräts (15), die das Benutzerendgerät (15) in einem Telekommunikationsnetzwerk (13) identifiziert;
- Übertragen, an eine Netzwerkplattform (12) des Telekommunikationsnetzwerks (13), einer Anfrage nach einer Bestätigung des Benutzers, wobei die Anfrage die Netzwerkkennung des Benutzerendgeräts (15) beinhaltet;
- nach dem Empfangen einer Bestätigung des Benutzers von der Netzwerkplattform, Erstellen einer Eingabe in der Benutzerdatenbank (11), wobei die Eingabe die Netzwerkkennung des Benutzerendgeräts (15) beinhaltet, und Übertragen, an das Benutzerendgerät, einer Nachricht, die eine Verknüpfung zu einer Seite für das Angeben zusätzlicher mit dem Benutzer assoziierter Daten beinhaltet;
- Assoziieren der zusätzlichen Daten mit der in der Benutzerdatenbank (11) erstellten Eingabe,
wobei das Verfahren ferner die folgenden Schritte beinhaltet, die in der Netzwerkplattform (12) durchgeführt werden:
- nach dem Empfangen der Anfrage nach einer Bestätigung des Benutzers, Feststellen, ob auf dem Benutzerendgerät (15), das durch die in der Anfrage enthaltene Netzwerkkennung identifiziert wird, eine Sicherheitsanwendung installiert ist;
- im Fall einer positiven Feststellung, Übertragen einer Nachricht, um über die auf dem Benutzerendgerät (15) installierte Sicherheitsanwendung ein Pop-up-Fenster anzuzeigen, wobei das Pop-up-Fenster die Möglichkeit zum Quittieren oder zum Annullieren der Bestätigung anbietet; und
- im Fall einer Quittierung des Pop-up-Fensters durch den Benutzer, Übertragen einer Bestätigung des Benutzers an den Verwaltungsserver (10).

2. Verfahren nach Anspruch 1, das ferner den folgenden Schritt beinhaltet, der in der Netzwerkplattform (12) durchgeführt wird:
- im Fall einer negativen Feststellung, ob eine Sicherheitsanwendung auf dem Benutzerendgerät (15) installiert ist, Übertragen einer Nachricht an den Verwaltungsserver, die angibt, dass die Sicherheitsanwendung nicht auf dem Benutzerendgerät installiert ist.

3. Verfahren nach Anspruch 1, das ferner die folgenden Schritte beinhaltet, die in der Netzwerkplattform (12) durchgeführt werden:
- im Fall einer negativen Feststellung, ob eine Sicherheitsanwendung auf dem Benutzerendgerät (15) installiert ist, Übertragen einer Kurznachricht an das Benutzerendgerät, wobei die Kurznachricht nach einer Bestätigung des Benutzers fragt;
- im Fall eines Empfangs einer Kurzantwortnachricht, die eine Bestätigung des Benutzers beinhaltet, Übertragen der Bestätigung des Benutzers an den Verwaltungsserver (10).

4. Verfahren nach einem der vorhergehenden Ansprüche, das ferner die folgenden Schritte beinhaltet, die in dem Verwaltungsserver (10) durchgeführt werden:
- Empfangen von Guthabeninformationen, die mit der Netzwerkkennung des Benutzerendgeräts (15) assoziiert sind;
- Übertragen, an das Benutzerendgerät, einer Anfrage nach einer Annahme des Guthabens durch den Benutzer, die die Netzwerkkennung des Benutzerendgeräts beinhaltet;
- nach dem Empfangen einer Annahme des Guthabens durch den Benutzer, Aktualisieren, in der Benutzerdatenbank, eines Guthabens des Benutzers in Abhängigkeit von den empfangenen Guthabeninformationen.

5. Verfahren nach einem der vorhergehenden Ansprüche, das ferner die folgenden Schritte beinhaltet, die in dem Verwaltungsserver (10) durchgeführt werden:
- Empfangen von Informationen über das Verwenden eines Guthabens, die mit der Netzwerkkennung (15) des Benutzerendgeräts assoziiert sind;
- Übertragen, an das Benutzerendgerät, einer Anfrage nach einer Annahme des Verwendens des Guthabens durch den Benutzer, die die Netzwerkkennung des Benutzerendgeräts beinhaltet;
- nach dem Empfangen einer Annahme des Verwendens des Guthabens durch den Benutzer, Aktualisieren, in der Benutzerdatenbank (11), eines Guthabens des Benutzers in Abhängigkeit von den empfangenen Informationen über das Verwenden des Guthabens.

6. Verfahren nach Anspruch 4 oder 5, wobei das Übertragen, an das Benutzerendgerät (15), einer Anfrage nach einer Annahme das Übertragen einer Nachricht, um über eine auf dem Benutzerendgerät installierte Sicherheitsanwendung ein Pop-up-Fenster anzuzeigen, beinhaltet.

7. Verfahren nach Anspruch 6, wobei die Benutzerdatenbank (11) ferner die Netzwerkkennungen der Benutzerendgeräte (15), auf denen die Sicherheitsanwendung installiert ist, abspeichert und wobei die Nachricht zum Anzeigen des Pop-up-Fensters nach einer positiven Feststellung in der Benutzerdatenbank, ob die Sicherheitsanwendung auf dem Benutzerendgerät installiert ist, an das Benutzerendgerät übertragen wird.

8. Verfahren nach einem der vorhergehenden Ansprüche, wobei nach einer Feststellung, dass keine Eingabe in der Benutzerdatenbank der Netzwerkkennung des Benutzerendgeräts entspricht, die Anfrage nach einem Empfang einer Bestätigung des Benutzers an die Netzwerkplattform (12) übertragen wird.

9. Computerprogramm, das Anweisungen zum Durchführen des Verfahrens nach einem der vorhergehenden Ansprüche beinhaltet, wenn dieses Programm von zwei Prozessoren ausgeführt wird.

10. System, das eine Plattform eines Telekommunikationsnetzwerks (13) und einen Verwaltungsserver (10), der für eine Benutzerdatenbank zuständig ist, beinhaltet, wobei der Verwaltungsserver Folgendes beinhaltet:
- eine Empfangseinheit (31), die dazu konfiguriert ist, eine Netzwerkkennung eines Benutzerendgeräts (15) zu empfangen, die das Benutzerendgerät (15) in dem Telekommunikationsnetzwerk identifiziert;
- eine Netzwerkschnittstelle (33) eines Servers, die dazu konfiguriert ist, eine Anfrage nach einer Bestätigung des Benutzers an die Netzwerkplattform eines Telekommunikationsnetzwerkbetreibers zu übertragen, wobei die Anfrage die Netzwerkkennung des Benutzerendgeräts beinhaltet, und die dazu konfiguriert ist, eine Bestätigung des Benutzers von der Netzwerkplattform zu empfangen;
- eine Erstellungseinheit (32), die dazu konfiguriert ist, nach dem Empfangen einer Bestätigung des Benutzers von der Netzwerkplattform eine Eingabe in der Benutzerdatenbank (11) zu erstellen, wobei die Eingabe die Netzwerkkennung des Benutzerendgeräts beinhaltet, wobei die Netzwerkschnittstelle ferner dazu konfiguriert ist, nach dem Empfangen der Bestätigung des Benutzers von der Netzwerkplattform eine Nachricht an das Benutzerendgerät zu übertragen, die eine Verknüpfung zu einer Seite für das Angeben zusätzlicher mit dem Benutzer assoziierter Daten beinhaltet;
und wobei die Erstellungseinheit (32) ferner dazu konfiguriert ist, zusätzliche Daten mit der in der Benutzerdatenbank (11) erstellten Eingabe zu assoziieren,
wobei die Netzwerkplattform Folgendes beinhaltet:
- eine erste Netzwerkschnittstelle (41) einer Plattform, die dazu konfiguriert ist, die Anfrage nach einer Bestätigung eines Benutzers von dem Verwaltungsserver einer Datenbank zu empfangen;
- eine Feststellungseinheit (42), die dazu konfiguriert ist, festzustellen, ob auf dem Benutzerendgerät (15), das durch die in der Anfrage enthaltene Netzwerkkennung identifiziert wird, eine Sicherheitsanwendung installiert ist;
- eine zweite Netzwerkschnittstelle (43) einer Plattform, die dazu konfiguriert ist, im Fall einer positiven Feststellung durch die Feststellungseinheit (42) eine Nachricht zu übertragen, um über die auf dem Benutzerendgerät (15) installierte Sicherheitsanwendung ein Pop-up-Fenster anzuzeigen, wobei das Pop-up-Fenster die Möglichkeit zum Quittieren oder zum Annullieren der Bestätigung anbietet, wobei die erste Netzwerkschnittstelle (41) ferner dazu ausgelegt ist, im Fall einer Quittierung des Pop-up-Fensters durch den Benutzer eine Bestätigung des Benutzers an den Verwaltungsserver zu übertragen.

## Claims

1. Method for securing an entry in a database of users (11), said method comprising the following steps implemented in a management server (10) in charge of said database:
- reception of a network identifier of a user terminal (15), identifying said user terminal (15) in a telecommunications network (13);
- transmission to a network platform (12) of the telecommunications network (13) of a request of a confirmation of the user, the request comprising the network identifier of the user terminal (15);
- on receipt of a confirmation of the user from the network platform, creation of an entry in the database of users (11), said entry comprising the network identifier of the user terminal (15) and transmission to the user terminal of a message comprising a link to a page for supplying additional data associated with the user;
- association of the additional data with the entry created in the database of users (11),
the method furthermore comprising the following steps implemented in the network platform (12):
- on receipt of the request of a confirmation of the user, verification that a security application is installed on the user terminal (15) identified by the network identifier included in the request;
- in case of positive verification, transmission of a message for displaying a pop-up window via the security application installed on the user terminal (15), the pop-up window prompting validation or cancellation of the confirmation; and
- in case of validation of the pop-up window by the user, transmission of a confirmation of the user to the management server (10).

2. Method according to Claim 1, furthermore comprising the following step implemented in the network platform (12):
- in case of negative verification that a security application is installed on the user terminal (15), transmission of a message to the management server indicating that the security application is not installed on the user terminal.

3. Method according to Claim 1, furthermore comprising the following steps implemented in the network platform (12):
- in case of negative verification that a security application is installed on the user terminal (15), transmission of a short message to the user terminal, the short message requesting a confirmation of the user;
- in case of reception of a short response message comprising a confirmation of the user, transmission of the confirmation of the user to the management server (10) .

4. Method according to one of the preceding claims, furthermore comprising the following steps implemented in the management server (10):
- reception of credit information associated with the network identifier of the user terminal (15);
- transmission to the user terminal of a request for acceptance of the credit by the user comprising the network identifier of the user terminal;
- on receipt of an acceptance of the credit by the user, updating, in the database of users, of a credit of the user as a function of the credit information received.

5. Method according to one of the preceding claims, furthermore comprising the following steps implemented in the management server (10):
- reception of credit consumption information associated with the network identifier of the user terminal (15);
- transmission to the user terminal of a request for acceptance of the consumption of the credit by the user comprising the network identifier of the user terminal;
- on receipt of an acceptance of the consumption of credit by the user, updating, in the database of users (11), of a credit of the user as a function of the credit consumption information received.

6. Method according to Claim 4 or 5, in which the transmission to the user terminal (15) of an acceptance request comprises the transmission of a message for displaying a pop-up window via a security application installed on the user terminal.

7. Method according to Claim 6, in which the database of users (11) furthermore stores the network identifiers of the user terminals (15) on which the security application is installed, and in which the message for displaying the pop-up window is transmitted to the user terminal on positive verification in the database of users that the security application is installed on said user terminal.

8. Method according to one of the preceding claims, in which the request for reception of a confirmation of the user is transmitted to the network platform (12), on verification that no entry corresponds to the network identifier of the user terminal in the database of users.

9. Computer program comprising instructions for the implementation of the method according to any one of the preceding claims, when this program is executed by two processors.

10. System comprising a platform of a telecommunications network (13) and a management server (10) in charge of a database of users, said management server comprising:
- a reception unit (31) configured to receive a network identifier of a user terminal (15), identifying the user terminal (15) in the telecommunications network;
- a server network interface (33) configured for the transmission, to the network platform of an operator of the telecommunications network, of a request of a confirmation of the user, the request comprising the network identifier of the user terminal, and configured for the reception of a confirmation of the user from the network platform;
- a creation unit (32) configured to create, on receipt of a confirmation of the user from the network platform, an entry in the database of users (11), said entry comprising the network identifier of the user terminal,
in which the network interface is furthermore configured to, on receipt of the confirmation of the user from the network platform, transmit to the user terminal a message comprising a link to a page for supplying additional data associated with the user;
and in which the creation unit (32) is furthermore configured to associate additional data with the entry created in the database of users (11),
the network platform comprising:
- a first platform network interface (41) configured to receive the request of a confirmation of a user from the management server of a database;
- a verification unit (42) configured to verify that a security application is installed on the user terminal (15) identified by the network identifier included in the request;
- a second platform network interface (43) configured to transmit, in case of positive verification by the verification unit (42), a message for displaying a pop-up window via the security application installed on the user terminal, said pop-up window prompting validation or cancellation of the confirmation, in which the first network interface (41) is furthermore adapted to transmit a confirmation of the user to the management server, in case of validation of the pop-up window by the user.
